Europäisches Patentamt

European Patent Office

Office européen des brevets

(11) Publication number: **0 096 595**
**A1**

## (12) EUROPEAN PATENT APPLICATION

(21) Application number: **83303320.2**

(22) Date of filing: **08.06.83**

(51) Int. Cl.³: **F 16 D 25/063**

(30) Priority: **14.06.82 GB 8217159**

(43) Date of publication of application:
**21.12.83 Bulletin 83/51**

(84) Designated Contracting States:
**DE FR GB IT NL**

(71) Applicant: BORG-WARNER LIMITED
Jubilee Road
Letchworth Hertfordshire(GB)

(72) Inventor: Gardner, Derek
114 Wymondley Road
Hitchin Herfordshire(GB)

(74) Representative: Barlow, Roy James et al,
J.A.KEMP & CO. 14, South Square Gray's Inn
London WC1R 5EU(GB)

(54) Compact clutch.

(57) A compact clutch includes a hub (24), cylinder (26) and piston (38) nested within the clutch plates (50, 52, 54, 64) thus minimizing the overall axial length. Location of the cylinder (26) and piston (38) close to the axis of rotation minimizes the effect of centrifugal force, while location of the clutch plates (50, 52, 54, 64) far from the axis of rotation maximizes the torque capacity.

EP 0 096 595 A1

- 1 -

## COMPACT CLUTCH

This invention relates generally to a clutch. More particularly, it relates to a compact clutch which provides high torque capacity but which occupies a short axial length. Such a compact clutch is adapted for use, for example, in a front-wheel-drive automotive vehicle incorporating a continuously variable transmission (CVT).

Clutch diameter is a critical dimension in the typical transmission used in a rear-wheel-drive vehicle. As automotive vehicles are downsized, considerable work is being directed to the application of the CVT to front-wheel-drive vehicles. It is becoming clear that in this environment space constraints relate to clutch length rather than diameter.

Thus, there is now a need in the art for a compact clutch which will provide high torque capacity but which occupies only a short axial length.

To meet the need noted above, one aspect of the present invention comprises a clutch as set out in claim 1.

Another aspect of the invention provides the clutch as set out in claim 3.

The piston slides a tension member, in the form of a clutch drum, over a fixed clutch spine in order to effect clutch engagement. Orientation of the cylinder and piston relatively close to the axis of rotation minimizes the effect of centrifugal force while orientation of the clutch plates relatively far

-2-

from the axis of rotation maximizes the torque capacity of the clutch.

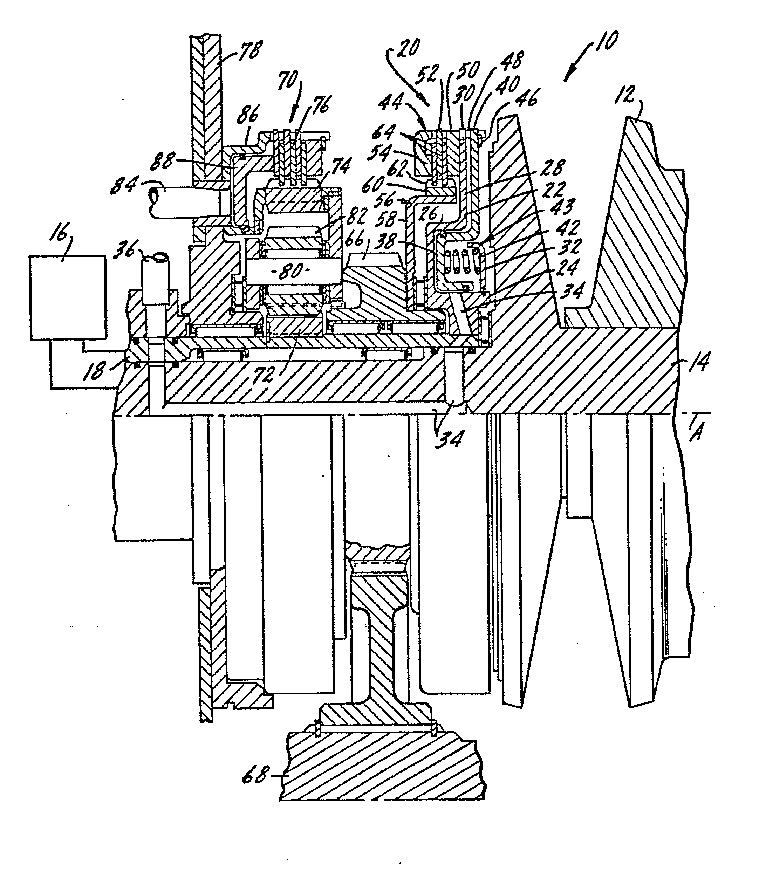

The objects and advantages of this invention will become apparent to those skilled in the art upon careful consideration of the specification herein, including the drawing which is a sectional view showing the compact clutch of this invention in a CVT.

While this invention is susceptible of embodiment in many different forms, the preferred embodiment is shown in the drawing and described in detail. It should be understood that the present disclosure is considered to be an exemplification of the principles of the invention, and is not intended to limit the invention to this embodiment.

Referring to the drawing in greater detail, there is shown partially a CVT 10. CVT 10 includes a pulley 12 which may be the output pulley of a belt/pulley assembly. Pulley 12 drives a shaft 14 about an axis A. CVT 10 includes suitable means 16 for coupling shaft 14 with a quill 18 journalled on shaft 14 for rotation about axis A.

The compact clutch 20 of this invention includes an input member 22 in the form of a clutch spine. Spine 22 is fixed axially, and defines a hub 24 secured to quill 18 for rotation therewith. Spine 22 also defines a cylinder 26 oriented radially outwardly of hub 24 and,

-3-

outwardly of cylinder 26, a disc 28 with a plurality of teeth 30 at its outermost end. Also extending outwardly from hub 24 is a reaction member 32.

Cylinder 26 is in communication with a controlled source of fluid pressure (not shown) by means of a fluid passage 34 extending through hub 24, quill 18, shaft 14 and a suitable fluid line 36.

A piston 38 is axially slidable within cylinder 26. Piston 38 defines a radially outwardly-extending disc 40 adjacent disc 28 of spine 22. A suitable spring 42 reacts against member 32 and acts upon piston 38 to bias it leftwardly as shown in the drawing. Spine 22, piston 38 and spring 42 together define clutch actuating means 43.

A clutch drum 44 is secured at one end thereof to the outermost end of disc 40 by a snap ring 46. Drum 44 defines a plurality of axially oriented slots 48 into which loosely extend teeth 30 of spine 22. A clutch backing plate 50 and at least one clutch separator plate 52 extend inwardly from slots 48. At its other end, drum 44 terminates in an inwardly-extending clutch pressure plate 54.

An output member 56 includes a disc 58 and a ring 60 oriented between cylinder 26 and drum 44. Ring 60 defines a spline 62. A plurality of clutch friction plates 64 extend outwardly from spline 62 into axial alignment with clutch plates 50, 52 and 54.

Disc 58 is secured to a gear 66 or the like

-4-

journalled on quill 18 for rotation about axis A. In an automotive environment, gear 66 may be in driving engagement with suitable reduction means 68 forming the input to a conventional differential and/or drive axle.

The arrangement so far described provides a torque delivery path in the forward direction. A torque delivery path in the reverse direction may be provided by disengaging clutch 20 and engaging a reversing mechanism 70.

Reversing mechanism 70 includes a sun gear 72 secured to quill 18. A ring gear 74 is engageable by a brake 76 with the housing 78 of CVT 10. A carrier 80 is splined to gear 66. Carrier 80 supports a plurality of planet gears 82 (one of which is shown in the drawing) in meshing relationship with sun gear 72 and ring gear 74.

A suitable fluid line 84 communicates a controlled source of fluid pressure (not shown) with a cylinder 86 in order to control the movement of a piston 88 so as to selectively engage brake 76.

It should be apparent that with brake 76 disengaged and clutch 20 engaged, drive is in the forward direction. Similarly, with clutch 20 disengaged and brake 76 engaged, drive is in the reverse direciton.

An important feature of this invention is the arrangement of clutch 20 such that hub 24, cylinder 26 and piston 38 are in substantial radial alignment with clutch plates 50, 52, 54 and 64. That is, they are nested within these plates to thereby provide a compact

-5-

clutch having a minimum axial length.

Another important feature of this invention is the orientation of cylinder 26 and piston 38 radially inwardly of the clutch plates and thus relatively close to axis A. This minimizes the effect of centrifugal force on clutch operation, which effect could be a tendency to overcome the control pressure and cause an undesriable clutch engagement. With this orientation, there may not be any requirement for ball check valves, counter-balancing dams, etc.

Yet another important feature of this invention is the orientation of the clutch plates at the radially outermost position possible. This allows for the largest possible friction surface area, and thus maximizes the torque capacity of clutch 20. As noted above, this high torque capacity is provided in a clutch having a short axial length.

Introduction of fluid through line 36 and passage 34 into cylinder 26 causes axial movement of piston 38 rightwardly, in a clutch-engaging direction, against the biasing force of spring 42. Drum 44 is placed in tension as it is pulled rightwardly over teeth 30. Pressure plate 54 and plates 52 and 64 are squeezed rightwardly against backing plate 50, and clutch 20 is engaged. Relief of fluid pressure from cylinder 26 allows biasing spring 42 to move piston 38 leftwardly, in a clutch-disengaging direction, thereby disengaging clutch 20.

The invention disclosed herein provides an inexpensive, compact clutch which may be formed from simple stampings. The compact clutch has high torque

-6-

capacity while occuping a short axial length.

It is not intended that the compact clutch of this invention be restricted in its application to an automotive environment in general or a CVT in particular. Rather, it is contemplated that the compact clutch may be utilized in a wide variety of applications where high torque capacity and short axial length are desirable.

CLAIMS

1.    A clutch rotatable about an axis (A); characterised in that said clutch comprises actuating means (26,38) relatively close to said axis (A); a drum (44) and ring (60) relatively far from said axis (A) in substantial radial alignment with said actuating means to give  the clutch a compact configuration; and a plurality of frictionally engageable clutch plates (52,64) supported by said drum and ring; said actuating means selectively sliding said drum (44) axially relative to said ring (60) for effecting frictional engagement and disengagement of said clutch plates.

2.    A clutch according to claim 1, characterised in that said actuating means includes an axially fixed disc (28) defining at least one tooth (30) at its outer end, and an axially slidable disc (40) drivingly engaged with said drum (44); and in that said drum (44) defines at least one axial slot (48) in which said tooth (30) is loosely received.

3.    A clutch rotatable about an axis (A); characterised in that said clutch comprises a spine (22) including a hub (24) adjacent said axis (A), a cylinder (26) radially outwardly of said hub, and a disc (28) extending radially outwardly from said cylinder; a piston (38) axially slidable in said cylinder and including a disc (40) extending radially outwardly therefrom; a drum (44) engaged with said piston disc and slidable axially therewith relative to said spine disc (28), said drum (44) including a radially inwardly-extending pressure plate (54), a backing plate (50) and at least one separator plate (52) extending radially inwardly from said drum (44); a ring (60) oriented radially between said cylinder (26) and drum (44);

and at least one friction plate (64) extending radially outwardly from said ring (60); in that said hub (24), cylinder (26), piston (38), and plates (50,52,54,64) are in substantial radial alignment such that the axial length of said clutch is minimized, the effect of centrifugal force on the operation of said clutch is minimized, and the torque capacity of said clutch is maximized.

4. A clutch according to claim 3, characterised in that said drum (44) defines at least one axial slot (48); and in that said spine disc (28) at its radially outermost end defines at least one tooth (30) slidably received in said at least one slot (48).

5. A clutch according to claim 3 or 4; characterised in that said hub (24) defines a fluid passage (34) communicating with said cylinder (26) and adapted for communication with a source (36) of fluid under pressure for sliding said piston (38) in a clutch-engaging direction.

6. A clutch according to any one of claims 3, 4 and 5, characterised by further comprising a spring (42) biasing said piston (38) for axial sliding thereof in a clutch-disengaging direction.

7. A clutch according to any one of claims 3 to 6, characterised in that axial sliding of said piston (38) in a clutch-engaging direction places said drum (44) in tension, thereby sliding said pressure plate (54) toward said friction plates (64) and spine disc (28).

### European Patent Office

## EUROPEAN SEARCH REPORT

---

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A-  908 979  (EHRHARDT) <br> * Page 2, figures 1,2 * | 1-7 | F 16 D   25/063 |
| X | FR-A-2 276 501  (MOTOREN- UND TURBINEN-UNION) <br> * Whole document * | 1,2,4-6 | |
| X | US-A-3 823 802  (WINZELER) <br><br> * Whole document * | 1,2,4-6 | |
| X | GB-A-1 104 851  (BELORUSKY AVTOMOBILNY) <br> * Page 2, figure 1 * | 1,2,4-6 | |
| X | DE-B-1 181 011  (MAYBACH MOTOREN) <br> * Whole document * | 1,2,4-6 | **TECHNICAL FIELDS SEARCHED (Int. Cl. ³)** <br><br> F 16 D   25/00 |
| X | DE-B-1 256 966  (ORTLINGHAUS) <br><br> * Whole document * | 1,2,4-6 | |
| X | DE-A-2 818 808  (KLAUE) <br><br> * Whole document * | 1,2,4-6 | |
| A | FR-A-2 432 647  (ZAHNRADFABRIK FRIEDRICHSHAFEN) <br><br> ---         -/- | | |

The present search report has been drawn up for all claims

| Place of search THE HAGUE | Date of completion of the search 09-09-1983 | Examiner BALDWIN D.R. |
|---|---|---|

EP   83  30  3320

## DOCUMENTS CONSIDERED TO BE RELEVANT

Page   2

| Category | Citation of document with indication, where appropriate, of relevant passages | Relevant to claim | CLASSIFICATION OF THE APPLICATION (Int. Cl. ³) |
|---|---|---|---|
| A | US-A-2 656 905   (LANGDON) | | |
| A | US-A-3 016 121   (MOSBACHER) | | |
| A | US-A-3 064 780   (RICHARDS) | | |
| A | FR-A-1 460 372   (BORG-WARNER) | | |

TECHNICAL FIELDS
SEARCHED (Int. Cl. ³)

The present search report has been drawn up for all claims

| Place of search THE HAGUE | Date of completion of the search 09-09-1983 | Examiner BALDWIN D.R. |
|---|---|---|